(19) Europäisches Patentamt
European Patent Office
Office européen des brevets

(11) Veröffentlichungsnummer: **0 407 825 A1**

# (12) EUROPÄISCHE PATENTANMELDUNG

(21) Anmeldenummer: **90112389.3**

(51) Int. Cl.5: **C08K 5/3417**, C08L 81/02

(22) Anmeldetag: **29.06.90**

(30) Priorität: **12.07.89 DE 3922876**

(43) Veröffentlichungstag der Anmeldung:
**16.01.91 Patentblatt 91/03**

(84) Benannte Vertragsstaaten:
**BE DE FR GB IT**

(71) Anmelder: **BAYER AG**

**D-5090 Leverkusen 1 Bayerwerk(DE)**

(72) Erfinder: **Köhler, Burkhard, Dr.**
**Mündelheimer Strasse 94**
**D-4150 Krefeld 11(DE)**
Erfinder: **Pielartzik, Harald, Dr.**
**Doerperhofstrasse 39**
**D-4150 Krefeld(DE)**
Erfinder: **Traenckner, Hans-Joachim, Dr.**
**Leiebos 31, Bus 00111**
**B-2060 Merksem(BE)**
Erfinder: **Dhein, Rolf, Dr.**
**Deswatinesstrasse 30**
**D-4150 Krefeld(DE)**
Erfinder: **Kraft, Klaus, Dr.**
**Doerperhofstrasse 15**
**D-4150 Krefeld(DE)**

## (54) Mischungen aus Polyarylensulfiden, Glasfasern und Imiden oder Amidsäuren aus bicyclischen, ungesättigten Disäuren.

(57) Die Erfindung betrifft Mischungen aus Polyarylensulfiden, Glasfasern und Imiden oder Amidsäuren bicyclischer Dicarbonsäuren, die sich durch gute mechanische Eigenschaften und eine erhöhte Schmelzviskosität des Grundharzes auszeichnen.

EP 0 407 825 A1

# MISCHUNGEN AUS POLYARYLENSULFIDEN, GLASFASERN UND IMIDEN ODER AMIDSÄUREN AUS BICYCLISCHEN, UNGESÄTTIGTEN DISÄUREN

Die Erfindung betrifft Mischungen aus Polyarylensulfiden, Glasfasern und Imiden oder Amidsäuren bicyclischer Dicarbonsäuren, die sich durch gute mechanische Eigenschaften und eine erhöhte Schmelzviskosität des Grundharzes auszeichnen.

Polyarylensulfide sind bekannt (z.B. US-A 3 354 129, EP-A 171 021). Sie sind inerte, hochtemperaturbeständige Thermoplaste, die einen hohen Füllgrad, z.B. mit Glasfasern und/oder anderen anorganischen Füllstoffen erlauben. Der Einsatz dieser Polymeren, insbesondere des Polyphenylensulfids (PPS) nimmt in Bereichen zu, die bisher Duroplasten vorbehalten waren.

PPS hat unbefriedigende mechanische Eigenschaften für einige Anwendungen im Spritzgußbereich. Insbesondere sind Randfaserdehnung und Schlagzähigkeit für die Praxis nicht ausreichend. Es hat sich daher als Vorteil er wiesen, PPS z.B. durch Abmischung mit anderen Thermoplasten in den genannten Eigenschaften zu verbessern.

Abmischungen von Polyarylensulfiden mit Polycarbonaten sind bekannt (z.B. JP-A 5 159 952, EP-A 104 543, US-A 4 021 596). Für bestimmte Anwendungsgebiete ist das Eigenschaftsprofil derartiger Abmischungen jedoch nicht immer ganz befriedigend.

Ferner ist bekannt, daß PAS sich durch Abmischen mit Maleinimiden in seinen Eigenschaften modifizieren läßt. Meist wird dabei eine Verzweigung von PPS angestrebt, indem entweder PAS unter oxidativen Bedingungen mit Maleinimiden umgesetzt wird, die mindestens drei Maleinimidgruppen und einen Triazinring enthalten (JP-A 021876-87, EP-A 105 639) und Mischungen aus Polyarylensulfiden und Maleinimiden (EP-A 275 991).

Maleinimide, besonders solche aus Diaminen, sind oft nur unter Schwierigkeiten herzustellen. Wünschenswert wären daher PAS-Modifikatoren, die leicht zugänglich sind und die Schmelzviskosität und/oder die mechanischen Eigenschaften von PAS verbessern.

Es wurde nun gefunden, daß Abmischungen von Polyarylensulfiden (PAS), vorzugsweise Polyphenylensulfid (PPS) mit Imiden oder Amidsäuren von bicyclischen Dicarbonsäuren und gegebenenfalls Glasfasern und/oder anderen Zusatzstoffen sich durch ihre mechanischen Eigenschaften und eine erhöhte Schmelzviskosität des Harzes auszeichnen.

Gegenstand der Erfindung sind daher Mischungen aus

A) 99,9 bis 20 Gew.-%, vorzugsweise

90 bis 20 Gew.-% Polyarylensulfiden, vorzugsweise Polyphenylensulfid,

B) 0,1 bis 40 Gew.-%, vorzugsweise

0,5 bis 5 Gew.-% eines Imids der Formel I oder einer Amidsäure der Formel II und/oder III oder Gemischen solcher Verbindungen,

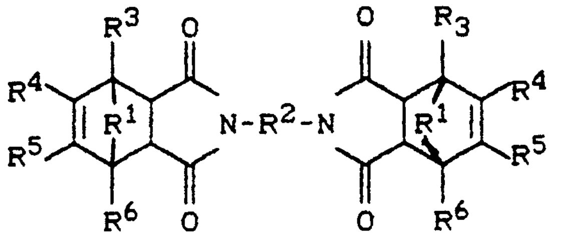

I,

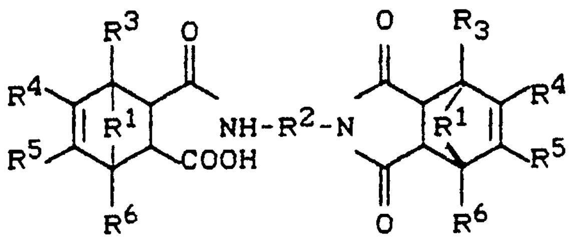

II,

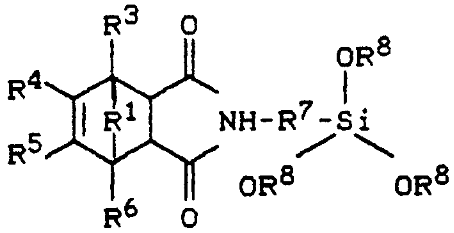

III,

wobei

$R^1$ ein $C_1$ bis $C_{22}$-Alkenylrest, vorzugsweise ein Methylen- oder ein 1,2-Etylenrest, ein Sauerstoffatom, ein Schwefelatom oder ein NH-, N-$C_1$-$C_6$-Alkyl- oder ein N-$C_6$-$C_{24}$-Arylrest, besonders bevorzugt ein Methylenrest ist,

$R^2$ ein divalenter Rest ist, der 1 bis 38 aliphatische Kohlenstoffatome, die auch in cycloaliphatischen Ringen angeordnet sein können, und/oder 6 bis 24 aromatische Kohlenstoffatome, die in 1 bis 4 aromatischen Ringen angeordnet sind, wobei bei zwei oder mehr aromatische Ringe enthaltenden Verbindungen dieses durch eine chemische Bindung, ein Sauerstoffatom, ein Schwefelatom, eine Carbonylgruppe, eine Disulfidbrücke oder eine Sulfongruppe verknüpft sein können, enthält,

$R^3$ bis $R^6$ gleich oder verschieden sein können und Wasserstoff, $C_1$ bis $C_{22}$-Alkyl, vorzugsweise Methyl, $C_6$-$C_{10}$-Aryl, vorzugsweise Phenyl, oder $C_1$-$C_{10}$-Alkenyl, vorzugsweise Allyl, besonders bevorzugt Wasserstoff bedeuten und

$R^7$ einen $C_1$-$C_{10}$-Alkenylrest, vorzugsweise einen Propan-1,3-diylrest oder einen Phenylenrest bedeutet und

$R^8$ einen $C_1$-$C_{10}$-Alkylrest bedeutet,

C) 0 bis 79,9 Gew-%, vorzugsweise

9,9 bis 79,9 Gew.-% Glasfasern und/oder anderen mineralischen oder organischen Füll- und Verstärkungsstoffen und/oder anorganische oder organischen Hilfsstoffen.

Beispiele für erfindungsgemäße Stoffe der Formel I sind die Bis-norbornendicarbonsäureimide von Hexamethylendiamin, m-Phenylendiamin, 2,4- und 2,6-Toloylendiamin, p-Phenylendiamin, 1,4-Diaminocyclohexan, Bis(4-aminophenyl)methan, Ethylendiamin, 4,4′-Diamindiphenylether, 3,3′- und 4,4′-Diaminodiphenylsulfon, 4,4′-Diaminodiphenylsulfid, 4,4′-und 3,3′-Diaminobenzophenon, Benzidin, 3,3′-Dimethylbenzidin, Isophorondiamin, 1,4-Diaminobutan, Bis(4-aminocyclohexyl)-methan, 2,2′-Bis(4-aminophenyl)propan.

Erfindungsgemäß einsetzbare Verbindungen der Formeln I, II und III können, wie oder analog in der US-A 3 528 950 beschrieben, aus Nobornen-dicarbonsäure und dem entsprechenden Diamin hergestellt werden.

Erfindungsgemäß werden handelsübliche, gegebenenfalls auf übliche Weise geschlichtete Glasfasern eingesetzt. Sie haben einen Durchmesser von 1 bis 20 µm, vorzugsweise von 1 bis 10 µm. Es können auch Endlosglasfasern eingesetzt werden und/oder Herstellungserfähren gewählt werden, bei denen die Länge der Fasern in der fertigen Abmischung 0,05 bis 10, vorzugsweise 0,1 bis 2 mm be trägt. Es können auch Endlosfasern (Rovings) eingesetzt werden in Verfahren zur Herstellung von endlosverstärktem Unidirektionalverbund.

Gegebenenfalls können auch - insbesondere teilweise -anstelle der Glasfasern handelsübliche Glaskugeln, eingesetzt werden, zB Ballotini-Glaskugeln.

Als weitere, mineralische Füllstoffe oder Zsuatzstoffe seien Glimmer, Talkum, Quarzmehl, Metalloxide und Sulfide, wie z.B $TiO_2$, ZnS, Graphit, Ruß, Fasern, z.B. aus Quarz oder Kohlenstoff, Carbonate, wie zB. $MgCO_3$, $CaCO_3$ oder Sulfate wie z.B. $CaSO_4$, $BaSO_4$, genannt.

Als weitere übliche Zusatzstoffe können Pigmente, Entformungsmittel, E-Wachse, Fließhilfsmittel, Nucleirungsmittel oder Stabilisatoren eingesetzt werden.

Die erfindungsgemäßen Mischungen können auf übliche Art und Weise durch Extrusion hergestellt werden.

Die erfindungsgemäßen Mischungen können auf übliche Weise zu Formteilen, Halbzeug, Fasern, Folien, Profilen usw. verarbeitet werden. Die erfindungsgemaßen Mischungen können generell in vorteilhafter Weise dort eingesetzt werden, wo thermoplastisch verarbeitbare Massen eingesetzt werden.

## Beispiele

### Beispiel 1

Synthese der Norbornadiendicarbonsäureamidsäuren

Man rührt die Lösung aus 1 Mol eines Diamins und 2 Mol Norbornadiendisäureanhydrid in 2 l Aceton 36 h bei Raumtemperatur. Man filtriert das ausgefallene Produkt ab. Die Ausbeute beträgt 80-95 %.

### Beispiel 2

Synthese der Norbornadiendicarbonsäureamide

Man kocht die Lösung aus 1 Mol Diamin und 2 Mol Norborndiendicarbonsäureanhydrid in 1 l Essigsäure 1 h unter Rückfluß, setzt 2 Mol Acetanhydrid hinzu und kocht weitere 2 h unter Rückfluß. Man destilliert die Essigsäure im Vakuum ab und erhält das Produkt im Rückstand in quantitativer Ausbeute.

### Beispiel 3

Man versetzt 98 g eines PPS der Schmelzviskosität 20 Pas (310 °C, Schubspannung 1000 $s^{-1}$) mit 2 g der Bisamidsäure von Bis(4-aminophenyl)methan und Norbornadiendicarbonsäure und erhitzt 5 min in einem Kneter auf 320 °C. Die Viskosität der Mischung beträgt anschließend 24 Pa s.

### Beispiel 4

Man versetzt 98 g des PPS aus Beispiel 3 mit 2 g des Bisimids von Bis(4-aminophenyl)methan und verfährt wie in Beispiel 3 angegeben. Die Viskosität der Mischung beträgt anschließend 24 Pa s.

### Beispiel 5

Man mischt mit einem Extruder (ZSK 32, Werner und Pfleiderer) 59 Gew.-% PPS des PPS aus Beispiel 3, 1 Gew.-% des Bisimids aus Beispiel 4 und 40 Gew.-% Glasfaser (CS 7919®). Die Schlagzähigkeit des Compounds beträgt 37 kJ/$m^2$, die Randfaserdehnung 2,2 %.

### Vergleichsbeispiel

Man stellt die Mischung aus Beispiel 5 ohne Zusatz des Bisimids mit 60 Gew.-% PPS her. Die Schlagzähigkeit des Compounds beträgt 28 kJ/m², die Randfaserdehnung 1,8 %.

## Ansprüche

1. Mischungen aus
A) 99,9 bis 20 Gew.-%, vorzugsweise
90 bis 20 Gew.-% Polyarylensulfiden, vorzugsweise Polyphenylensulfid
B) 0,1 bis 40 Gew.-%, vorzugsweise
0,5 bis 5 Gew.-% eines Imids der Formel I oder einer Amidsäure d Formel II und/oder II oder Gemischen solcher Verbindungen,

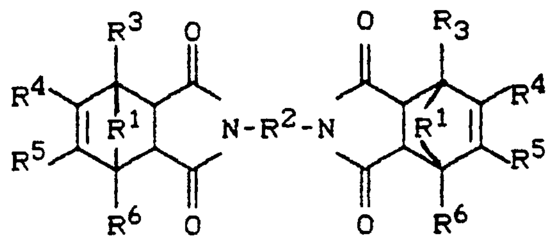

I,

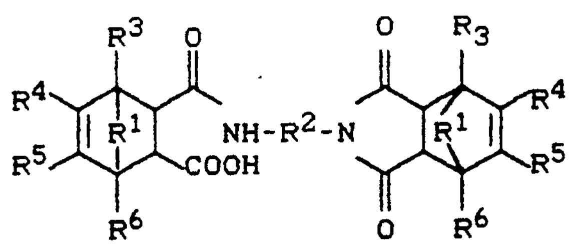

II,

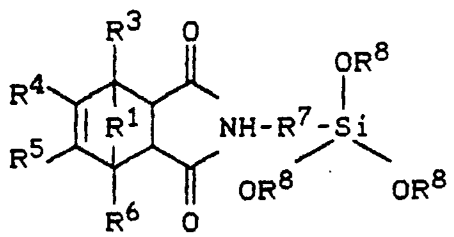

III,

wobei
$R^1$ ein $C_1$ bis $C_{22}$-Alkenylrest, vorzugsweise ein Methylen- oder ein 1,2-Etylenrest, ein Sauerstoffatom, ein Schwefelatom oder ein NH-, N-$C_1$-$C_6$-Alkyl- oder ein N-$C_6$-$C_24$-Arylrest, besonders bevorzugt ein Methylenrest ist,
$R^2$ ein divalenter Rest ist, der 1 bis 38 aliphatische Kohlenstoffatome, die auch in cycloaliphatischen Ringen angeordnet sein können, und/oder 6 bis 24 aromatische Kohlenstoffatome, die in 1 bis 4 aromatischen Ringen angeordnet sind, wobei bei zwei oder mehr aromatische Ringe enthaltenden Verbindungen dieses durch eine chemische Bindung, ein Sauerstoffatom, ein Schwefelatom, eine Carbonylgruppe, eine Disulfidbrücke oder eine Sulfongruppe verknüpft sein können, enthält,
$R^3$ bis $R^6$ gleich oder verschieden sein können und Wasserstoff, $C_1$ bis $C_{22}$-Alkyl, vorzugsweise Methyl, $C_6$-$C_{10}$-Aryl, vorzugsweise Phenyl, oder $C_1$-$C_{10}$-Alkenyl, vorzugsweise Allyl, besonders bevorzugt Wasserstoff bedeuten und
$R^7$ einen $C_1$-$C_{10}$-Alkenylrest, vorzugsweise einen Propan-1,3-diylrest oder einen Phenylenrest bedeutet und
$R^8$ einen $C_1$-$C_{10}$-Alkylrest bedeutet,
C) 0 bis 79,9 Gew.-%, vorzugsweise

9,9 bis 79,9 Gew.-% Glasfasern und/oder anderen mineralischen oder organischen Füll-und Verstärkungsstoffen und/oder anorganischen oder organischen Hilfsstoffen.

2. Verwendung von Mischungen nach Anspruch 1 zur Herstellung geformter Körper.

Europäisches Patentamt

# EUROPÄISCHER RECHERCHENBERICHT

Nummer der Anmeldung

**EP 90 11 2389**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | EP-A-0 275 991 (DAINIPPON INK)<br>* Ansprüche 1,7,9,11,17 * | 1,2 | C 08 K 5/3417<br>C 08 L 81/02 |
| A | PATENT ABSTRACTS OF JAPAN Band 12, Nr. 472 (C-551)(3319), 9. Dezember 1988;<br>& JP-A-63191858 (ASAHI GLASS) 09.08.1988 | 1 | |
| A | US-A-4 365 037 (T. ADACHI et al.)<br>* Ansprüche * | 1,2 | |
| A,D | US-A-3 528 950 (H. LUBOWITZ)<br>* claim 1 * | 1 | |

RECHERCHIERTE SACHGEBIETE (Int. Cl.5)

C 08 K
C 08 L
C 08 G

Der vorliegende Recherchenbericht wurde für alle Patentansprüche erstellt

| Recherchenort | Abschlußdatum der Recherche | Prüfer |
|---|---|---|
| Berlin | 11 Oktober 90 | BOEKER R.B. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument